# EUROPEAN PATENT APPLICATION

(11) **EP 4 674 297 A1**
(43) Date of publication of application: **07.01.2026**
(21) Application number: 23925183.8
(22) Date of filing: 27.02.2023
(51) Int. Cl.: A24F 40/90

(54) **POWER SUPPLY UNIT FOR AEROSOL-GENERATING DEVICE, CONTROL METHOD, AND CONTROL PROGRAM**

(71) Applicant: Japan Tobacco Inc., Tokyo 105-6927 (JP)
(72) Inventor: NAGAHAMA Toru, Tokyo 130-8603 (JP); YOSHIDA Ryo, Tokyo 130-8603 (JP); AOYAMA Tatsunari, Tokyo 130-8603 (JP)
(74) Representative: Hoffmann Eitle
(86) International application number: PCT/JP2023/007123
(87) International publication number: WO 2024/180625

(57) **Abstract**

An inhalation device (100) which is an example of a power supply unit for an aerosol-generating device comprises a power source unit (111), and a control unit (116). The power source unit (111) is configured to be capable of supplying power to a heating unit for heating an aerosol source and to be chargeable by means of power received from an external power source (PS). The control unit (116) acquires a temperature of the power source unit (111) and is configured to be capable of controlling charging of the power source unit (111) based on the temperature of the power source unit (111). The control unit (116) then varies a current value of a charging current for charging the power source unit (111) within a predetermined range in accordance with the temperature of the power source unit (111) when the temperature of the power source unit (111) is included in a first temperature zone, which is a temperature zone below a threshold temperature, and meanwhile makes the current value of the charging current even smaller than a lower limit value of the range when the temperature of the power source unit (111) is included in a second temperature zone, which is a temperature zone at or above the threshold temperature.

## Description

### TECHNICAL FIELD

The present disclosure relates to a power supply unit for an aerosol-generating device, a control method, and a control program.

### BACKGROUND ART

Aerosol-generating devices which generate an aerosol to which a flavor component has been added and enable a user to inhale the generated aerosol, for example, are conventionally known. This kind of aerosol-generating device typically generates the aerosol by heating an aerosol source by means of a heating unit (also referred to as a "heating element") which is an electrically-resistive or inductively-heated heater, by supplying the heating unit with power from a power source such as a rechargeable battery.

PTL 1 below discloses technology in which an ambient temperature next to a charging device comprising a rechargeable power source is monitored, and, in order to charge the rechargeable power source of the charging device, an ambient temperature-dependent charging current is determined, and the rechargeable power source of the charging device is charged at the charging current which has been determined.

Furthermore, PTL 2 below describes technology in which a first control unit of a power supply unit comprising a power source electrically connected to a load for atomizing an aerosol source or heating a flavor source, and a second control unit of a charging unit capable of charging the power source, control a charging rate of the power source.

### CITATION LIST

### PATENT LITERATURE

PTL 1: JP 2017-518733 A
PTL 2: JP 6934114 B2

### SUMMARY OF INVENTION

### TECHNICAL PROBLEM

However, there is still room for improvement in the conventional technology described above from the perspective of achieving higher-quality charging control.

The present disclosure provides a power supply unit for an aerosol-generating device, a control method, and a control program that enable higher-quality charging control to be achieved.

### SOLUTION TO PROBLEM

One aspect of the present disclosure is
a power supply unit for an aerosol-generating device for generating an aerosol by heating an aerosol source, the power supply unit comprising:
a power source which is capable of supplying power to a heating unit for heating the aerosol source and is configured to be chargeable by means of power received from an external power source; and
a control unit which is capable of acquiring a temperature of the power source and is configured to be capable of controlling charging of the power source based on the acquired temperature of the power source,
wherein
the control unit
varies a current value of a charging current for charging the power source within a predetermined range in accordance with the temperature of the power source when the temperature of the power source is included in a first temperature zone, which is a temperature zone below a predetermined threshold temperature, and
makes the current value of the charging current even smaller than a lower limit value of the predetermined range when the temperature of the power source is included in a second temperature zone, which is a temperature zone at or above the threshold temperature.

Furthermore, another aspect of the present disclosure is
a control method performed by a computer for controlling a power supply unit for an aerosol-generating device for generating an aerosol by heating an aerosol source, wherein
the power supply unit comprises a power source which is capable of supplying power to a heating unit for heating the aerosol source and is configured to be chargeable by means of power received from an external power source,
the computer is capable of acquiring a temperature of the power source and is configured to be capable of controlling charging of the power source based on the acquired temperature of the power source, and
the computer implements processing which
varies a current value of a charging current for charging the power source within a predetermined range in accordance with the temperature of the power source when the temperature of the power source is included in a first temperature zone, which is a temperature zone below a predetermined threshold temperature, and
makes the current value of the charging current even smaller than a lower limit value of the predetermined range when the temperature of the power source is included in a second temperature zone, which is a temperature zone at or above the threshold temperature.

Furthermore, another aspect of the present disclosure is
a control program which causes a computer for controlling a power supply unit for an aerosol-generating device for generating an aerosol by heating an aerosol source, to implement predetermined processing, wherein
the power supply unit comprises a power source which is capable of supplying power to a heating unit for heating the aerosol source and is configured to be chargeable by means of power received from an external power source,
the computer is capable of acquiring a temperature of the power source and is configured to be capable of controlling charging of the power source based on the acquired temperature of the power source, and
the control program causes the computer to implement processing which
varies a current value of a charging current for charging the power source within a predetermined range in accordance with the temperature of the power source when the temperature of the power source is included in a first temperature zone, which is a temperature zone below a predetermined threshold temperature, and
makes the current value of the charging current even smaller than a lower limit value of the predetermined range when the temperature of the power source is included in a second temperature zone, which is a temperature zone at or above the threshold temperature.

### ADVANTAGEOUS EFFECTS OF INVENTION

The present disclosure can provide a power supply unit for an aerosol-generating device, a control method, and a control program that enable higher-quality charging control to be achieved.

### BRIEF DESCRIPTION OF DRAWINGS

Fig. 1A is a schematic diagram schematically showing a first configuration example of an inhalation device.
Fig. 1B is a schematic diagram schematically showing a second configuration example of an inhalation device.
Fig. 2 is a schematic diagram schematically showing one configuration example of a part of the inhalation device 100 relating to charging of a power source unit 111.
Fig. 3 shows an example of charging control in the inhalation device 100.
Fig. 4 shows another example of charging control in the inhalation device 100.
Fig. 5 is a flowchart showing an example of processing implemented by an MCU 104.
Fig. 6 is a flowchart showing an example of processing implemented by a charging IC 103.

### DESCRIPTION OF EMBODIMENTS

Embodiments of the power supply unit for an aerosol-generating device, control method and control program according to the present disclosure will be described in detail below with reference to the drawings. The embodiments described below constitute an example in which the aerosol-generating device of the present disclosure is applied to an inhalation device. Note that the drawings shall be viewed in the orientation of the reference signs. Furthermore, hereinafter, identical or similar elements may be assigned identical or similar reference signs, and descriptions thereof may be omitted or simplified as appropriate.

### 1. Configuration example of inhalation device

An inhalation device constituting an example of the aerosol-generating device of the present disclosure is a device for generating a substance to be inhaled by a user. Hereinafter, the substance generated by the inhalation device will be described as being an aerosol. Alternatively, the substance generated by the inhalation device may be a gas.

### 1-1. First configuration example of inhalation device

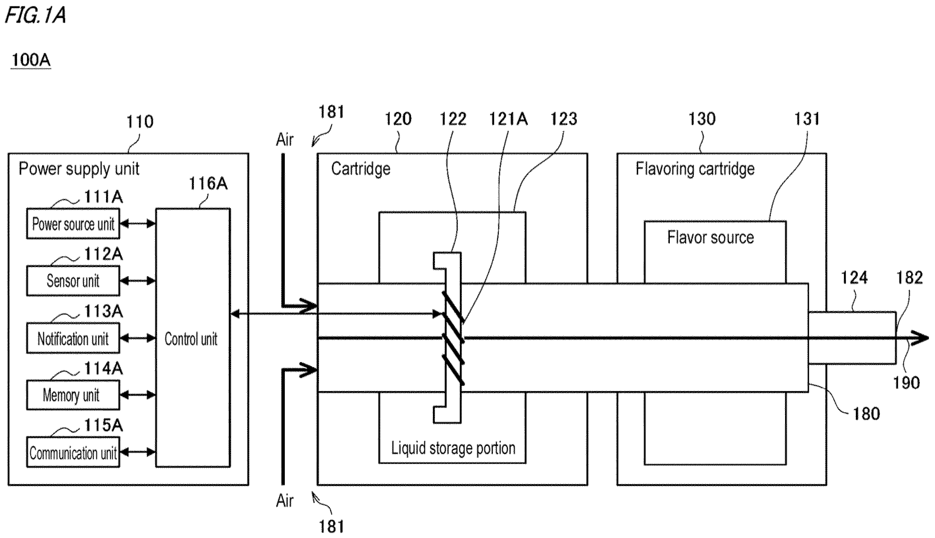

Fig. 1A is a schematic diagram schematically showing a first configuration example of the inhalation device. As shown in fig. 1A, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. Furthermore, the power source unit 111A is configured to be chargeable by means of power received from an external power source. The power source unit 111A may be configured, for example, by a rechargeable battery such as a lithium ion secondary battery.

The sensor unit 112A acquires various types of information relating to the inhalation device 100A. The sensor unit 112A is configured by, for example, a pressure sensor such as a capacitor microphone, a flow rate sensor or a temperature sensor, etc., and acquires values associated with inhalation by a user.

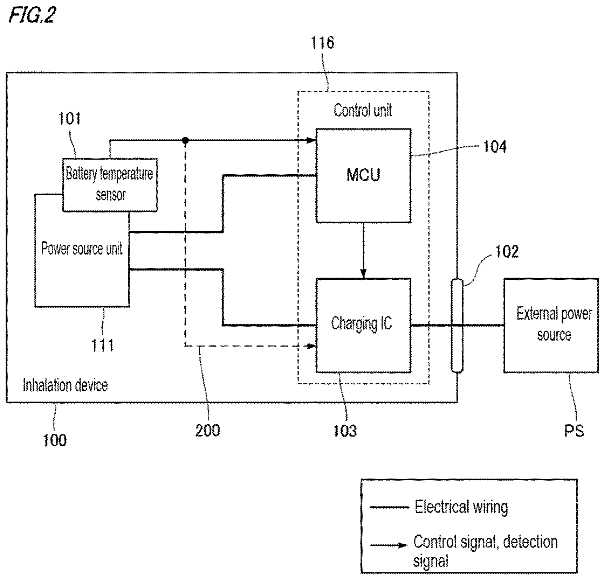

As an example, the sensor unit 112A may include a pressure sensor (also referred to as a "puff sensor") capable of detecting a change in pressure (also referred to hereinafter as "internal pressure") in the inhalation device 100A caused by inhalation by the user. As another example, the sensor unit 112A may include a flow sensor capable of detecting a flow rate caused by inhalation by the user (hereinafter simply referred to as "flow rate"). As another example, the sensor unit 112A may include a temperature sensor (also referred to as a "puff thermistor") capable of detecting the temperature of the heating unit 121A or the temperature around the heating unit 121A. The sensor unit 112A may further include a temperature sensor (e.g., a battery temperature sensor 101 in fig. 2) capable of detecting the temperature of the power source unit 111A or the temperature around the power source unit 111A.

Furthermore, the sensor unit 112A may comprise an input device, such as an operation button or a switch, for accepting input of information from the user. As an example, the sensor unit 112A may include an operation button as the input device that accepts a charging start request, which is described later.

The notification unit 113A notifies the user of information. The notification unit 113A can be configured by a light-emitting device which emits light, a display device which displays images, a sound output device which outputs sound, or a vibration device which vibrates, etc., for example.

The memory unit 114A stores various information (e.g. programs and data) for operation of the inhalation device 100A. The memory unit 114A can be configured by a nonvolatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs. For example, the control unit 116A controls the supply of electricity (power supply) from the power source unit 111A to each component (e.g., the heating unit 121A to be described later), and controls charging of the power source unit 111A by means of power received from an external power source PS. Note that the control unit 116A is realized by a central processing unit (CPU) or an electronic circuit such as a microprocessor, for example. As an example, the control unit 116A can be realized by an MCU 104 (MCU: Micro Controller Unit), or the like, which will be described later.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include tobacco-derived or non-tobacco-derived flavor components. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. The heating unit 121A is formed by any material, such as a metal or polyimide, in any shape, such as coiled, film-like or blade-like. In the example shown in fig. 1A, the heating unit 121A is configured as a coil wrapped around a heating resistor comprising nichrome or stainless steel, and is wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, the supply of electricity (power supply) to the heating unit 121A may be implemented when the sensor unit 112A has detected that the user has started inhaling and/or that predetermined information has been input. The supply of electricity to the heating unit 121A may then be stopped when the sensor unit 112A has detected that the user has finished inhaling and/or that predetermined information has been input.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A. The susceptor is made of a conductive material, such as a metal, and generates heat by means of electromagnetic induction. Furthermore, the susceptor is arranged adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source unit 111A. When a magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 includes tobacco-derived or non-tobacco-derived flavor components. The flavor source 131 may be, for example, a tobacco-derived substance such as shredded tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100A is a medical inhaler, the flavor source 131 may contain a drug to be inhaled by a patient. It should be noted that the aerosol source 131 is not limited to a solid, and may equally be a liquid containing a flavor component, such as a polyhydric alcohol such as glycerol or propylene glycol, or water, for example. Furthermore, the flavor source 131 may be arranged inside a container such as a capsule.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Along the air flow path 180, the liquid guiding portion 122 is disposed on the upstream side (the side closer to the air inflow hole 181), and the flavor source 131 is disposed on the downstream side (the side closer to the air outflow hole 182). Air flowing in through the air inflow hole 181 as the user inhales is mixed with the aerosol generated by the heating unit 121A and transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth to make it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may further include a flavor source heating unit (not depicted) for heating the flavor source 131. The flavor source heating unit is configured in a film shape and disposed so as to cover the outer circumference of the flavor source 131, for example. The flavor source heating unit then generates heat when supplied with power from the power source unit 111A, heating the flavor source 131 from the outer periphery thereof. Note that the flavor source heating unit may also be configured in a blade shape, piercing the flavor source 131 to heat the flavor source 131 from the inside, for example. Furthermore, the flavor source heating unit may be configured to heat the flavor source 131 by means of vibration or induction heating. Providing this flavor source heating unit makes it possible to increase the temperature of the flavor source 131 and to increase the amount of flavor component added to the aerosol, as compared to when the flavor source heating unit is not provided.

Furthermore, as another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### 1-2. Second configuration example of inhalation device

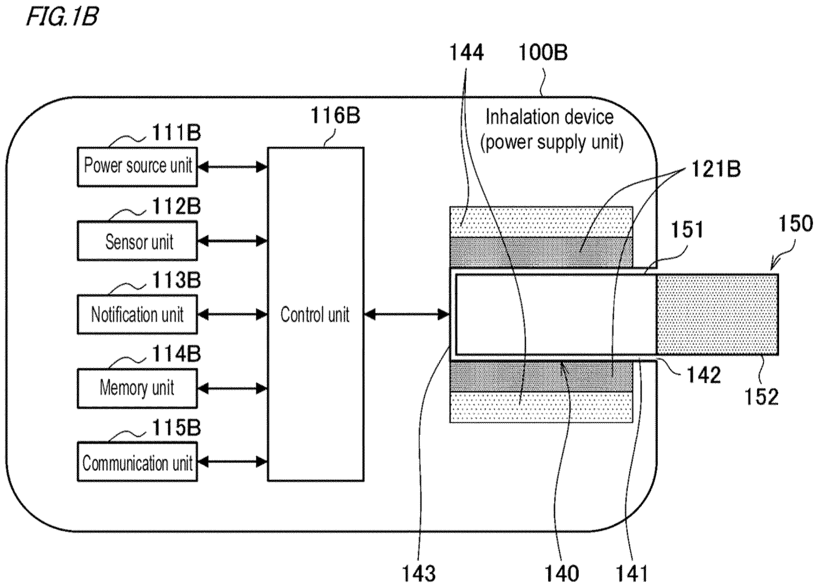

Fig. 1B is a schematic diagram schematically showing a second configuration example of the inhalation device. As shown in fig. 1B, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above. Moreover, in the case of the inhalation device 100B shown in fig. 1B, the inhalation device 100B itself may also be referred to as the power supply unit.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines the columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source comprises a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated in the drawings, and reaches the inside of the user's mouth together with the aerosol generated from the substrate portion 151.

In the example shown in fig. 1B, the heating unit 121B is configured as a film heater with a conductive track made of a heating resistor having a correlation between electrical resistance and temperature, and is arranged to cover the outer circumference of the housing part 140. Then, when the heating unit 121B generates heat, the substrate portion 151 of the stick-type substrate 150 is heated from the outer circumference, generating the aerosol. Note that a heating resistor the same as that of the heating unit 121A described above may be used as the heating resistor of the heating unit 121B.

The heat insulating portion 144 prevents heat transfer from the heating unit 121B to other components. For example, the heat insulating portion 144 is configured by a vacuum insulating material or an aerogel insulating material, etc.

A configuration example of the inhalation device 100B has been described above. The inhalation device 100B is, of course, not limited to the configuration described above, and various configurations, such as those illustrated below by way of example, may be adopted.

As one example, the heating unit 121B may have a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may comprise an opening/closing mechanism such as a hinge for opening/closing part of a casing that forms the internal space 141. By opening/closing the casing, the accommodating portion 140 may then receive and grip the stick-type substrate 150 that has been inserted into the internal space 141. In this case, the heating unit 121B may be provided on the gripping part of the accommodating portion 140, and may heat the stick-type substrate 150 while pressing the same.

Furthermore, the means for atomizing the aerosol source is not limited to heating by the heating unit 121B. For example, the means for atomizing the aerosol source may be induction heating. In this case, the inhalation device 100B comprises at least an electromagnetic induction source such as a coil for generating a magnetic field, instead of the heating portion 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100". Similarly, the heating unit 111A, etc. may be referred to as the "heating unit 111", the sensor unit 112A, etc. may be referred to as the "sensor unit 112", the notification unit 113A, etc. may be referred to as the "notification unit 113", the memory unit 114A, etc. may be referred to as the "memory unit 114", the communication unit 115A, etc. may be referred to as the "communication unit 115", the control unit 116A, etc. may be referred to as the "control unit 116", and the heating unit 121A, etc. may be referred to as the "heating unit 121".

### 1-3. One configuration example of the part relating to charging of the power source unit

Fig. 2 is a schematic diagram schematically showing one configuration example of a part of the inhalation device 100 relating to charging of the power source unit 111. In fig. 2, the thick solid lines denote electrical wiring, and the solid line arrows denote control signals or detection signals.

As shown in fig. 2, in addition to the power source unit 111, the inhalation device 100 further comprises: a battery temperature sensor 101, a power receiver 102, a charging IC 103, and an MCU 104. The control unit 116 described above is configured by the charging IC 103 and the MCU 104, etc. shown in fig. 2, for example.

The power source unit 111 is realized by means of a rechargeable battery, etc., for example, and is configured to be chargeable by means of power received from the external power source PS. Here, the external power source PS is a device configured to be capable of outputting predetermined power. Furthermore, the predetermined power is the power which the inhalation device 100 is capable of receiving in terms of hardware, and may be, for example, a DC voltage having a predetermined voltage (e.g., 5-20 [V]). The external power source PS may be an AC adapter (AC: alternating current) configured to be capable of outputting the predetermined power, for example. Furthermore, the external power source PS is not limited to an AC adapter, and may be, for example, a portable charger (also referred to as a power bank), a PC (personal computer), a smartphone, or a tablet terminal, for example.

The power source unit 111 is configured to be capable of supplying stored power to each component of the inhalation device 100, namely the charging IC 103, the MCU 104, and the heating unit 121 (not shown in fig. 2). It should be noted that fig. 2 shows an example in which power is supplied directly from the power source unit 111 to the MCU 104, but this is not limiting. For example, power may also be supplied from the power source unit 111 to the MCU 104 via the charging IC 103.

The battery temperature sensor 101 is a sensor configured to be capable of outputting detection signals indicating a parameter relating to the temperature of the power source unit 111. As an example, the battery temperature sensor 101 of this embodiment is a thermistor which is disposed in proximity to the rechargeable battery constituting the power source unit 111 (e.g., disposed so as to touch the rechargeable battery). The battery temperature sensor 101 then outputs a detection signal indicating an electrical resistance value of its own resistor to the MCU 104 as a detection signal indicating a parameter relating to the temperature of the power source unit 111. By this means, the MCU 104 can acquire the temperature of the power source unit 111 (also referred to below as the "battery temperature"), based on the detection signal received from the battery temperature sensor 101. Furthermore, the battery temperature sensor 101 may also output a detection signal directly indicating the battery temperature.

The power receiver 102 is configured to be capable of receiving power output from the external power source PS. As an example, the power receiver 102 is a receptacle which comprises a power supply terminal (e.g., a VBUS terminal) for receiving power output from the external power source PS, and which conforms to a standard such as USB-type C (registered trademark), microUSB, or Lightning (registered trademark). Furthermore, the power receiver 102 may be a power-receiving coil, or similar, which is configured to be capable of contactlessly receiving power delivered from the external power source PS. In this case, the method of contactless power transfer (WPT: wireless power transfer) may employ electromagnetic induction, magnetic resonance, or a combination of electromagnetic induction and magnetic resonance.

The charging IC 103 is an integrated circuit (IC) which is electrically provided between the power receiver 102 and the power source unit 111, and is configured to be capable of controlling charging of the power source unit 111 with the power received from the external power source PS via the power receiver 102; the charging IC 103 is an example of the first control unit of the present disclosure.

As an example, when there is a user charging start request, the charging IC 103 starts charging of the power source unit 111 with the power received from the external power source PS. Here, the charging start request may establish an electrical connection between the inhalation device 100 and the external power source PS, for example. Furthermore, the charging start request may further comprise a predetermined operation being performed once the electrical connection between the inhalation device 100 and the external power source PS has been established. Pressing a predetermined operation button provided on the inhalation device 100 is a possible example of this operation. Furthermore, this operation is not limited to a direct operation on the inhalation device 100, and it may equally be an operation on another device such as a smartphone which is capable of communicating with the inhalation device 100, for example.

When the power source unit 111 is charging, the charging IC 103 controls a current value of a charging current for charging the power source unit 111 (this will also be referred to below simply as a "charging current"), for example.

To describe this in more specific terms, the charging IC 103 varies the current value of the charging current within a predetermined range in accordance with an instruction from the MCU 104 (to be described later) when the battery temperature is included in a predetermined first temperature zone, for example. Here, the first temperature zone is a temperature zone below a predetermined threshold temperature, in other words, a temperature zone on the low-temperature side of the threshold temperature. As an example in this embodiment, the threshold temperature is set at 45 [°C], and the first temperature zone is a temperature zone below 45 [°C]. Furthermore, in this embodiment, the charging IC 103 varies the current value of the charging current within a range from 1500 [mA] to 2600 [mA] when the battery temperature is included in the first temperature zone.

Meanwhile, when the battery temperature is included in a predetermined second temperature zone, for example, the charging IC 103 makes the current value of the charging current even smaller than a lower limit value of the abovementioned range (this will also be referred to below simply as the "lower limit value", and is 1500 [mA] in the example of this embodiment), independently of an instruction from the MCU 104. Here, the second temperature zone is a temperature zone at or above the threshold temperature, in other words, a temperature zone on the high-temperature side of the threshold temperature. As mentioned above, the threshold temperature is 45 [°C] in this embodiment, so the second temperature zone is a temperature zone at or above 45 [°C].

The charging IC 103 thus has a protective function such that, when it is detected that the battery temperature has reached the second temperature zone, a further rise in the battery temperature is suppressed by considerably restricting the charging current spontaneously, independently of an instruction from the MCU 104.

Moreover, when the charging IC 103 is disposed in proximity to the power source unit 111 (e.g., the rechargeable battery) in the inhalation device 100, it can be considered that a correlation will be established between the temperature of the charging IC 103 and the battery temperature. In such a case, the charging IC 103 may therefore detect its own temperature and specify the battery temperature based on its own temperature. As an example, the charging IC 103 may specify the battery temperature on the assumption that its own temperature is equal to the battery temperature. As another example, the charging IC 103 may specify, as the battery temperature, a temperature obtained by adding, subtracting, or multiplying a preset fixed value to/from/by the temperature of the charging IC 103.

Furthermore, the battery temperature sensor 101 may output, to the charging IC 103, a detection signal indicating a parameter relating to the temperature of the power source unit 111, as shown by the broken line arrow indicated by the reference sign 200 in fig. 2. In this way, the charging IC 103 can acquire the battery temperature based on a detection signal received from the battery temperature sensor 101. As another example, the MCU 104 may output information indicating the battery temperature to the charging IC 103, and the charging IC 103 may acquire the battery temperature based on this information.

The MCU 104 is a computer which is mainly configured by a processor for implementing various types of arithmetic processing, and performs integrated control of the inhalation device 100 as a whole in accordance with a pre-prepared program; the MCU 104 is an example of the second control unit of the present disclosure. The charging IC 103 is included in components under the control of the MCU 104.

To describe this in more specific terms, when the power source unit 111 is being charged with the power received from the external power source PS, the MCU 104 acquires the battery temperature at predetermined intervals of time (e.g., every 5 [ms]) based on the detection signals received from the battery temperature sensor 101. When the acquired battery temperature is included in the first temperature zone, the MCU 104 then instructs the charging IC 103 to vary the current value of the charging current within a predetermined range (a range from 1500 [mA] to 2600 [mA] in the example of this embodiment). At this point, the MCU 104 varies the current value of the charging current so that the battery temperature does not exceed a threshold temperature (45 [°C] in the example of this embodiment). An example of charging control of this embodiment will be described in more detail below.

### 2. Charging control

### 2-1. Example of charging control in inhalation device

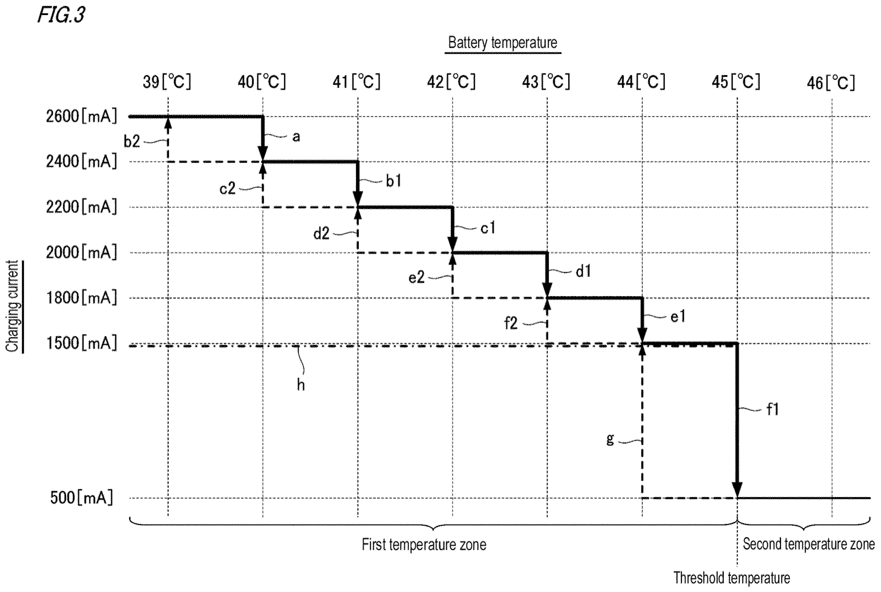

Fig. 3 shows an example of charging control in the inhalation device 100. As shown in fig. 3, when the battery temperature is included in the first temperature zone, for example, the MCU 104 varies the current value of the charging current stepwise within a range from 1500 [mA] to 2600 [mA], in accordance with the battery temperature.

To describe this in more specific terms, when the battery temperature is less than 40 [°C], the MCU 104 sets the current value of the charging current at 2600 [mA], which is an upper limit value of the abovementioned range (this will also be referred to below simply as the "upper limit value"). The MCU 104 then sets the current value of the charging current at 2400 [mA] if the battery temperature reaches a temperature of 40 [°C] or greater and less than 41 [°C] (e.g., 40 [°C]) while the current value of the charging current is set at 2600 [mA] (see the solid line arrow with the reference sign "a" in fig. 3).

Furthermore, the MCU 104 sets the current value of the charging current at 2200 [mA] if the battery temperature reaches a temperature of 41 [°C] or greater and less than 42 [°C] (e.g., 41 [°C]) while the current value of the charging current is set at 2400 [mA] (see the solid line arrow with the reference sign "b1" in fig. 3). Meanwhile, the MCU 104 sets the current value of the charging current at 2600 [mA] if the battery temperature reaches a temperature of less than 40 [°C] (e.g., 39 [°C]) while the current value of the charging current is set at 2400 [mA] (see the broken line arrow with the reference sign "b2" in fig. 3).

Furthermore, the MCU 104 sets the current value of the charging current at 2000 [mA] if the battery temperature reaches a temperature of 42 [°C] or greater and less than 43 [°C] (e.g., 42 [°C]) while the current value of the charging current is set at 2200 [mA] (see the solid line arrow with the reference sign "c1" in fig. 3). Meanwhile, the MCU 104 sets the current value of the charging current at 2400 [mA] if the battery temperature reaches a temperature of 40 [°C] or greater and less than 41 [°C] (e.g., 40 [°C]) while the current value of the charging current is set at 2200 [mA] (see the broken line arrow with the reference sign "c2" in fig. 3).

Furthermore, the MCU 104 sets the current value of the charging current at 1800 [mA] if the battery temperature reaches a temperature of 43 [°C] or greater and less than 44 [°C] (e.g., 43 [°C]) while the current value of the charging current is set at 2000 [mA] (see the solid line arrow with the reference sign "d1" in fig. 3). Meanwhile, the MCU 104 sets the current value of the charging current at 2200 [mA] if the battery temperature reaches a temperature of 41 [°C] or greater and less than 42 [°C] (e.g., 41 [°C]) while the current value of the charging current is set at 2000 [mA] (see the broken line arrow with the reference sign "d2" in fig. 3).

Furthermore, the MCU 104 sets the current value of the charging current at the lower limit value of 1500 [mA] if the battery temperature reaches a temperature of 44 [°C] or greater and less than 45 [°C] (e.g., 44 [°C]) while the current value of the charging current is set at 1800 [mA] (see the solid line arrow with the reference sign "e1" in fig. 3). Meanwhile, the MCU 104 sets the current value of the charging current at 2000 [mA] if the battery temperature reaches a temperature of 42 [°C] or greater and less than 43 [°C] (e.g., 42 [°C]) while the current value of the charging current is set at 1800 [mA] (see the broken line arrow with the reference sign "e2" in fig. 3).

Then, when the battery temperature reaches 45 [°C] or greater, in other words, when the battery temperature reaches the second temperature zone, the charging IC 103 sets the current value of the charging current at 500 [mA], which is even smaller than the lower limit value of 1500 [mA], independently of an instruction from the MCU 104 (see the solid line arrow with the reference sign "f1" in fig. 3).

It should be noted that when the current value of the charging current has been set at 500 [mA], the charging IC 103 may keep the current value at 500 [mA] until the end of the charging in progress, or may resume charging in accordance with an instruction from the MCU 104 based on the battery temperature having reached a temperature of less than 45 [°C] (e.g., 44 [°C]). As an example, and as shown by the broken line arrow with the reference sign "g" in fig. 3, when the battery temperature has reached a temperature of less than 45 [°C] (e.g., 44 [°C]) while the current value of the charging current is set at 500 [mA], the charging IC 103 may resume charging in accordance with an instruction from the MCU 104, and may set the current value of the charging current at 1500 [mA], for example.

Furthermore, the MCU 104 sets the current value of the charging current at 1800 [mA] if the battery temperature reaches a temperature of 43 [°C] or greater and less than 44 [°C] (e.g., 43 [°C]) while the current value of the charging current is set at 1500 [mA] (see the broken line arrow with the reference sign "f2" in fig. 3).

Charging control is thus performed in the inhalation device 100 so that, when the battery temperature has reached a temperature zone close to the threshold temperature at which the protection function of the charging IC 103 is activated (a temperature zone of 40-44 [°C] in the example shown in fig. 3), the charging current is reduced as the battery temperature rises, and the charging current is increased as the battery temperature falls. This makes it possible to ensure that, as far as possible, the battery temperature does not exceed the threshold temperature, and to limit situations where the protection function of the charging IC 103 is activated so that the charging current is considerably restricted. The power source unit 111 can therefore be charged with a relatively large charging current, so the power source unit 111 can be efficiently charged.

If the battery temperature were to exceed the threshold temperature despite this charging control, the charging current would be considerably restricted because of the protection function of the charging IC 103 being activated, and it is therefore possible to more reliably limit further rises in the battery temperature.

As described above, the charging IC 103 and the MCU 104 (i.e., the control unit 116), make it possible to vary the current value of the charging current within a predetermined range in accordance with the battery temperature when the battery temperature is included in the first temperature zone below the threshold temperature. Meanwhile, the current value of the charging current can be made even smaller than the lower limit value of the predetermined range when the battery temperature is included in the second temperature zone at or above the threshold temperature. This enables the charging current to be suitably controlled in accordance with the battery temperature, and also makes it possible for the power source unit 111 to be efficiently charged while limiting situations in which the power source unit 111 reaches a high temperature. Accordingly, it is possible to achieve higher-quality charging control, enabling the charging time of the power source unit 111 to be shortened while also ensuring safety.

More specifically, for example, the MCU 104 instructs the charging IC 103 to vary the current value of the charging current within the predetermined range in accordance with the battery temperature when the battery temperature is included in the first temperature zone. The charging IC 103 then varies the current value of the charging current in accordance with instructions from the MCU 104 when the battery temperature is included in the first temperature zone. As a result, when the battery temperature is included in the first temperature zone, it is possible for the power source unit 111 to be efficiently charged while limiting situations in which the power source unit 111 reaches a high temperature. Furthermore, the charging IC 103 makes the current value of the charging current even smaller than the lower limit value of the predetermined range, independently of an instruction from the MCU 104, when the battery temperature is included in the second temperature zone. By this means, even if the battery temperature were to exceed the threshold temperature despite the charging current being suitably controlled in accordance with the battery temperature, the charging IC 103 would spontaneously restrict the charging current without awaiting an instruction from the MCU 104, thereby enabling any further rises in the battery temperature to be rapidly suppressed.

Furthermore, the charging IC 103 and the MCU 104 (i.e., the control unit 116) vary the current value of the charging current in accordance with the battery temperature so that the battery temperature does not exceed the threshold temperature, when the battery temperature is included in the first temperature zone, for example. This makes it possible to limit situations in which the charging current is restricted because of the battery temperature exceeding the threshold temperature, and also enables the power source unit 111 to be efficiently charged.

Furthermore, the charging IC 103 and the MCU 104 (i.e., the control unit 116) vary the current value of the charging current stepwise in accordance with the battery temperature when the battery temperature is included in the first temperature zone, for example. This allows the charging current to be controlled more simply and more suitably in accordance with the battery temperature.

Furthermore, the charging IC 103 and the MCU 104 (i.e., the control unit 116) set the current value of the charging current at a predetermined first current value (e.g., 2200 [mA]) if the battery temperature reaches a predetermined first temperature (e.g., 41 [°C]) when the battery temperature is also included in the first temperature zone, and set the current value of the charging current at a second current value (e.g., 2400 [mA]) greater than the first current value if the battery temperature reaches a second temperature lower than the first temperature while the current value of the charging current is set at the first current value. This makes it possible to vary the current value to the larger second current value in response to a drop in battery temperature while the current value of the charging current is set at the first current value, enabling the power source unit 111 to be efficiently charged.

Furthermore, the charging IC 103 and the MCU 104 (i.e., the control unit 116) set the current value of the charging current at a third current value smaller than the first current value if the battery temperature reaches a third temperature higher than the first temperature while the current value of the charging current is set at the first current value as described above, for example. This makes it possible to vary the current value to the smaller third current value in response to a rise in battery temperature while the current value of the charging current is set at the first current value, making it possible to reduce the load on the power source unit 111 (i.e., heat generation) and to further suppress a rise in battery temperature.

Furthermore, as described above in this embodiment, if the battery temperature drops from 42 [°C] to 41 [°C] while the power source unit 111 is being charged, for example, the charging current is increased from 2000 [mA] to 2200 [mA]. The change in charging current from 2200 [mA] to another current value (e.g., 2000 [mA] or 2400 [mA]) is made on the basis of the battery temperature having reached a temperature other than 41 [°C] (e.g., 40 [°C] or 42 [°C]).

In other words, according to this embodiment, the battery temperature (e.g., 41 [°C]) serving as the condition under which the charging current is set at one current value (e.g., 2200 [mA]), and the battery temperature (e.g., 40 [°C] or 42 [°C]) serving as the condition under which the current value is changed from said one current value to another current value, are different from each other.

If the battery temperature serving as the condition under which the charging current is set at one current value and the battery temperature serving as the condition under which the charging current is changed from said one current value to another current value were equal, then what is known as "chattering" would occur, where the charging current is set at one current value and then changed to another current value immediately after, then once again set at said one current value immediately after the change, which might cause a difficulty in terms of continuous and repeated increases and decreases in the charging current. In this embodiment, the battery temperature serving as the condition under which the charging current is set at one current value, and the battery temperature serving as the condition under which the charging current is changed from said one current value to another current value are therefore made different from each other to limit the occurrence of such a difficulty.

Furthermore, electricity is supplied from the power source unit 111 to the heating unit 121 (i.e., the power source unit 111 is discharged) when an aerosol is generated by means of the heating unit 121. It is therefore also conceivable that the battery temperature will increase immediately after the aerosol has been generated by means of the heating unit 121. Furthermore, due to, e.g., hardware constraints in the inhalation device 100, etc., it is also conceivable that there will be a time lag from the start of charging until the abovementioned charging control is applied (that is, the feedback control of varying the charging current in accordance with the battery temperature).

In the period immediately after the start of charging until the abovementioned charging control is applied, it is therefore also possible that a situation will arise where a large charging current (e.g., at the upper limit value of 2600 [mA]) flows, despite the battery temperature increasing immediately after the aerosol has been generated by means of the heating unit 121. If such a situation occurs, the battery temperature immediately reaches the threshold temperature (e.g., 45 [°C]), and there is a risk of the charging current being restricted and the charging time lengthening as a result.

The charging IC 103 and the MCU 104 (i.e., the control unit 116) therefore set the current value of the charging current at a predetermined current value smaller than the upper limit value of the predetermined range for a predetermined period, when there has been a charging start request after generation of the aerosol.

More specifically, when a charging start request has been made before 5 minutes have elapsed from the most recent aerosol generation, the MCU 104 may instruct the charging IC 103 to set the current value of the charging current at 1500 [mA], which is smaller than the upper limit value of 2600 [mA], regardless of the battery temperature, during a period until 10 minutes have elapsed from the start request, as shown by the single-dot chain line with the reference sign "h" in fig. 3.

In this way, when there has been a charging start request after aerosol generation, the current value of the charging current is set at a current value smaller than the upper limit value for a predetermined period, thereby avoiding a situation in which a large charging current flows while the power source unit 111 is at a high temperature after aerosol generation, making it possible to suppress a further rise in the battery temperature. Furthermore, in this case, it is possible to more reliably avoid a situation in which a large charging current flows while the battery temperature is a high temperature by setting the current value of the charging current at the lower limit value (1500 [mA] in the example of this embodiment) in the predetermined period.

The charging IC 103 and the MCU 104 (i.e., the control unit 116) may then vary the current value of the charging current within the predetermined range in accordance with the battery temperature, when the battery temperature after the predetermined period has elapsed is included in the first temperature zone. This enables the charging current to be suitably controlled in accordance with the battery temperature after the predetermined period has elapsed, and also makes it possible for the power source unit 111 to be efficiently charged while limiting situations in which the power source unit 111 reaches a high temperature.

Furthermore, from the same perspective, the charging IC 103 and the MCU 104 (i.e., the control unit 116) may set the current value of the charging current at a predetermined current value (e.g., the lower limit value of 1500 [mA]) smaller than the upper limit value for a predetermined period (e.g., 10 minutes from when a charging start request was made), when the battery temperature at the time of the charging start request was equal to or greater than a predetermined temperature (e.g., 35 [°C]) included in the first temperature zone. This makes it possible to avoid a situation in which a large charging current flows while the power source unit 111 is at a high temperature, making it possible to suppress a further rise in the battery temperature. The charging IC 103 and the MCU 104 (i.e., the control unit 116) may then vary the current value of the charging current within the predetermined range in accordance with the battery temperature, when the battery temperature after the predetermined period has elapsed is included in the first temperature zone.

It should be noted that in the example described above, the charging current was increased and decreased with respect to battery temperature increments and decrements of 1 [°C], but this is not limiting. For example, the charging current may equally be increased and decreased with respect to battery temperature increments and decrements of 0.5 [°C], or the charging current may be increased and decreased with respect to battery temperature increments and decrements of 2 [°C].

### 2-2. Other example of charging control in inhalation device

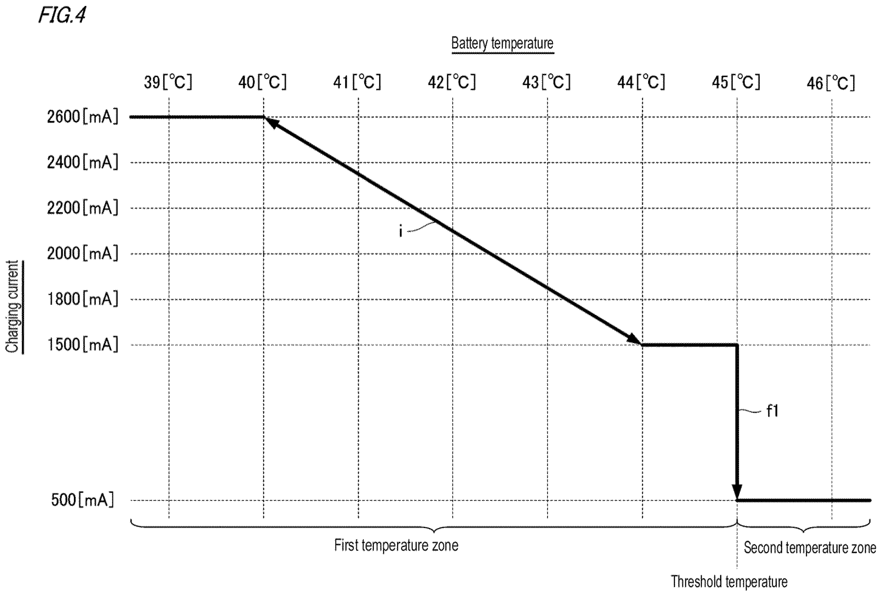

Fig. 4 shows another example of charging control in the inhalation device 100. As shown by the solid line arrow with the reference sign "i" in fig. 4, the charging IC 103 and the MCU 104 (i.e., the control unit 116) may vary the current value of the charging current linearly within the abovementioned range in accordance with the battery temperature, when the battery temperature is included in the first temperature zone. This allows the charging current to be controlled more finely and more suitably in accordance with the battery temperature.

### 3. Example of processing relating to charging implemented by control unit

An example of processing relating to charging implemented by the control unit 116 will be described next.

### Processing implemented by MCU

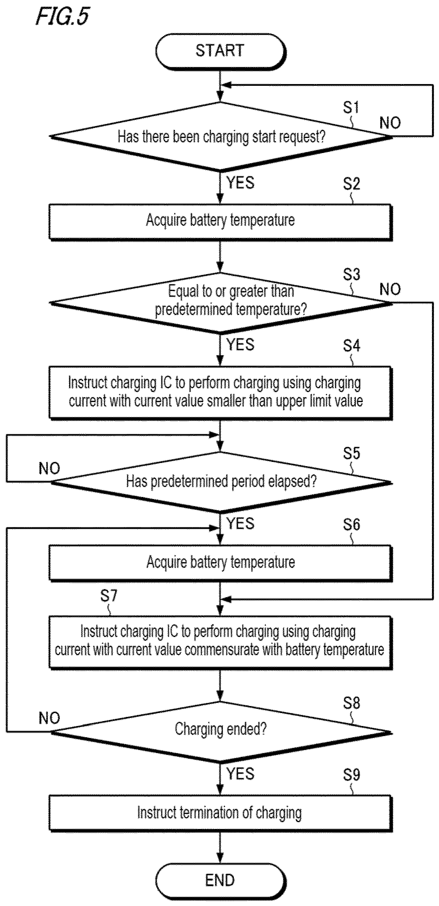

An example of the processing in the control unit 116 implemented by the MCU 104 will be described first of all. Fig. 5 is a flowchart showing an example of processing implemented by the MCU 104. As shown in fig. 5, the MCU 104 determines whether or not there has been a charging start request from the user (step S1). If it is determined that there is no charging start request (step S1: NO), the MCU 104 repeats the processing of step S1 until it is determined that there has been a charging start request.

If it is determined that there has been a charging start request (step S1: YES), the MCU 104 acquires the battery temperature on the basis of a detection signal from the battery temperature sensor 101 (step S2), then determines whether or not the acquired battery temperature is equal to or greater than a predetermined temperature (e.g., 35 [°C]) (step S3). If it is determined that the battery temperature is less than the predetermined temperature (step S3: NO), the MCU 104 advances to the processing of step S7 without any other processing.

Meanwhile, if it is determined that the acquired battery temperature is equal to or greater than the predetermined temperature (step S3: YES), the MCU 104 instructs the charging IC 103 to charge the power source unit 111 using a charging current with a predetermined current value (e.g., 1500 [mA]) smaller than the upper limit value (step S4). The MCU 104 then determines whether or not a predetermined period (e.g., 10 minutes) has elapsed (step S5). If it is determined that the predetermined period has not elapsed (step S5: NO), the MCU 104 repeats the processing of step S5 until the predetermined period has elapsed.

If it is determined that the predetermined period has elapsed (step S5: YES), the MCU 104 acquires the battery temperature on the basis of a detection signal from the battery temperature sensor (step S6), and instructs the charging IC 103 to charge the power source unit 111 using a charging current with a current value commensurate with the battery temperature, as shown in fig. 3 and 4, etc. (step S7).

The MCU 104 then determines whether or not charging has ended (step S8). As an example, the MCU 104 determines that charging has ended in response to a predetermined charging end condition being established. The power source unit 111 being in a state of full charge is an example of the charging end condition. Furthermore, the electrical connection between the inhalation device 100 and the external power source PS being interrupted is another example of the charging end condition.

If it is determined that charging has ended (step S8: YES), the MCU 104 then instructs the charging IC 103 to terminate charging of the power source unit 111 (step S9), and terminates the processing series shown in fig. 5. Meanwhile, if it is determined that charging has not ended (step S8: NO), the MCU 104 returns to the processing of step S6 and repeats the processing above.

### Processing implemented by charging IC

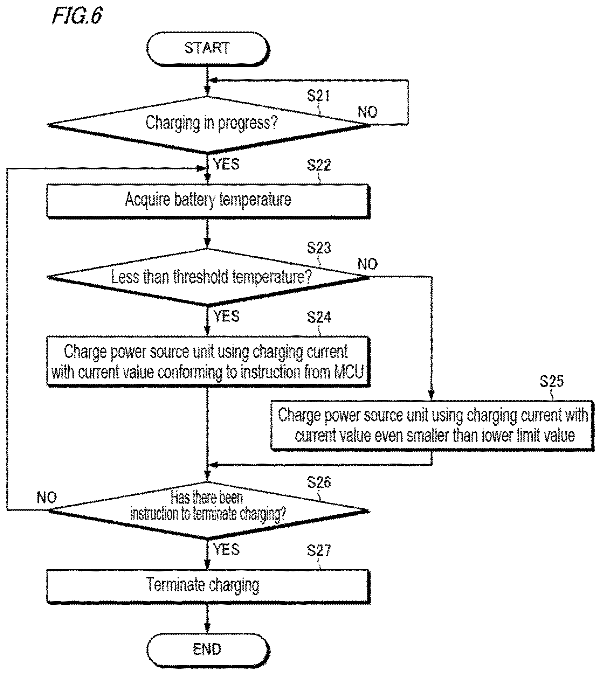

An example of the processing in the control unit 116 implemented by the charging IC 103 will be described next. Fig. 6 is a flowchart showing an example of processing implemented by the charging IC 103. As shown in fig. 6, the charging IC 103 determines whether or not charging of the power source unit 111 is in progress (step S21). If it is determined that charging of the power source unit 111 is not in progress (step S21: NO), the charging IC 103 repeats the processing of step S21 until charging of the power source unit 111 is started.

If charging of the power source unit 111 is in progress (step S21: YES), the charging IC 103 acquires the battery temperature on the basis of its own temperature, for example (step S22). Furthermore, when the battery temperature sensor 101 is configured to output detection signals to the charging IC 103 as well, the charging IC 103 may acquire the battery temperature on the basis of a detection signal from the battery temperature sensor 101.

The charging IC 103 then determines whether or not the acquired battery temperature is less than a threshold temperature (e.g., 45 [°C]) (step S23). If it is determined that the battery temperature is less than the threshold temperature (step S23: NO), that is, if it is determined that the battery temperature is included in the first temperature zone, the charging IC 103 charges the power source unit 111 using a charging current with a charging value conforming to an instruction from the MCU 104 (step S24).

Meanwhile, if it is determined that the battery temperature is equal to or greater than the threshold temperature (step S23: YES), that is, if it is determined that the battery temperature is included in the second temperature zone, the charging IC 103 charges the power source unit 111 using a charging current with a current value (e.g., 500 [mA]) even smaller than the lower limit value, independently of an instruction from the MCU 104.

The charging IC 103 then determines whether or not there has been an instruction to terminate charging from the MCU 104 (step S26). If it is determined that there has been an instruction to terminate charging (step S26: YES), the charging IC 103 terminates charging of the power source unit 111 (step S27), and terminates the processing series shown in fig. 6. Meanwhile, if it is determined that there is no instruction to terminate charging, the charging IC 103 returns to the processing of step S22 and repeats the processing above.

As described above, collaboration between the charging IC 103 and the MCU 104 in the inhalation device 100 enables the charging current to be suitably controlled in accordance with the battery temperature, and also makes it possible for the power source unit 111 to be efficiently charged while limiting situations in which the power source unit 111 reaches a high temperature. Accordingly, it is possible to achieve higher-quality charging control, enabling the charging time of the power source unit 111 to be shortened while also ensuring safety.

It should be noted that the examples described here are merely examples and are not limiting. For example, some of the processing shown in fig. 5 may also be implemented by the charging IC 103, and some of the processing shown in fig. 6 may likewise also be implemented by the MCU 104.

Furthermore, specific numerical values given in the embodiments above are merely examples and are not limiting. Furthermore, the embodiments above may be modified or improved, etc. as appropriate.

Furthermore, the control method described in the embodiments above can be realized by executing a pre-prepared program on a computer (processor). The program is stored on a computer-readable storage medium, and is executed by being read out from the storage medium. The program may also be provided in a form stored in a non-transitory storage medium such as a flash memory, or may be provided over a network such as the Internet. Furthermore, the computer executing the program may be, for example, included in the inhalation device 100 (e.g., the CPU of the inhalation device 100), but this is not limiting, and the computer may also be included in another device (e.g., a smartphone or server) capable of communicating with the inhalation device 100.

Embodiments of the power supply unit for an aerosol-generating device, control method and control program according to the present disclosure were described above, but it goes without saying that the present invention is not limited to such embodiments. It is obvious that a person skilled in the art will be able to conceive of a number of variant examples or modified examples within the scope disclosed in the claims, and any such variant examples or modified examples are naturally understood to fall within the technical scope of the present invention. Furthermore, the components in the embodiments described above may be combined in any way within a scope that does not depart from the essential point of the invention.

The present specification, etc. sets forth at least the following features. Corresponding components, etc. in the embodiments described above are shown by way of example in parentheses, but there is no limitation to such components.
(1) A power supply unit (inhalation device 100, 100B; power supply unit 110) for an aerosol-generating device (inhalation device 100, 100A, 100B) for generating an aerosol by heating an aerosol source, the power supply unit comprising:
   a power source (power source unit 111, 111A, 111B) configured to be capable of supplying power to a heating unit (heating unit 121, 121A, 121B) for heating the aerosol source and to be chargeable by means of power received from an external power source (heating unit 121, 121A, 121B); and
   a control unit (control unit 116, 116A, 116B; charging IC 103; MCU 104) which acquires a temperature of the power source and is configured to be capable of controlling charging of the power source based on the temperature of the power source,
   wherein
   the control unit
   varies a current value of a charging current for charging the power source within a predetermined range in accordance with the temperature of the power source when the temperature of the power source is included in a first temperature zone, which is a temperature zone below a predetermined threshold temperature, and
   makes the current value of the charging current even smaller than a lower limit value of the predetermined range when the temperature of the power source is included in a second temperature zone, which is a temperature zone at or above the threshold temperature.

According to (1), a current value of a charging current for charging the power source can be varied within a predetermined range in accordance with the temperature of the power source when the temperature of the power source is included in a first temperature zone, which is a temperature zone below a predetermined threshold temperature. Meanwhile, the current value of the charging current can be made even smaller than the lower limit value of the predetermined range when the temperature of the power source is included in the second temperature zone, which is a temperature zone at or above the threshold temperature. This enables the charging current to be suitably controlled in accordance with the temperature of the power source, and also makes it possible for the power source to be efficiently charged while limiting situations in which the power source reaches a high temperature. Accordingly, it is possible to achieve higher-quality charging control, enabling the charging time of the power source to be shortened while also ensuring safety.

(2) The power supply unit as disclosed in (1), wherein
the control unit
varies the current value of the charging current in accordance with the temperature of the power source when the temperature of the power source is included in the first temperature zone, so that the temperature of the power source does not exceed the threshold temperature.

According to (2), it is possible to limit situations in which the charging current is restricted because of the temperature of the power source exceeding the threshold temperature, and the power source can be efficiently charged.

(3) The power supply unit as disclosed in (1) or (2), wherein
the control unit
varies the current value of the charging current stepwise in accordance with the temperature of the power source when the temperature of the power source is included in the first temperature zone.

According to (3), the charging current can be controlled more simply and more suitably in accordance with the battery temperature.

(4) The power supply unit as disclosed in (1) or (2), wherein
the control unit
varies the current value of the charging current linearly in accordance with the temperature of the power source when the temperature of the power source is included in the first temperature zone.

According to (4), the charging current can be controlled more finely and more suitably in accordance with the battery temperature.

(5) The power supply unit as disclosed in (3) or (4), wherein
the control unit
sets the current value of the charging current at a predetermined first current value if the temperature of the power source reaches a predetermined first temperature when the temperature of the power source is also included in the first temperature zone, and
sets the current value of the charging current at a second current value greater than the first current value if the temperature of the power source reaches a second temperature lower than the first temperature while the current value of the charging current is set at the first current value.

According to (5), it is possible to vary the current value to the larger second current value in response to a drop in the temperature of the power source while the current value of the charging current is set at the first current value, enabling the power source to be efficiently charged.

(6) The power supply unit as disclosed in (5), wherein
the control unit
sets the current value of the charging current at a third current value smaller than the first current value if the temperature of the power source reaches a third temperature higher than the first temperature while the current value of the charging current is set at the first current value.

According to (6), it is possible to vary the current value to the smaller third current value in response to a rise in the temperature of the power source while the current value of the charging current is set at the first current value, making it possible to reduce the load on the power source (i.e., heat generation) and to further suppress a rise in the temperature of the power source.

(7) The power supply unit as disclosed in (3), wherein
the temperature of the power source serving as the condition under which the charging current is set at one current value, and the temperature of the power source serving as the condition under which the charging current is changed from said one current value to another current value, are different from each other.

If the temperature of the power source serving as the condition under which the charging current is set at one current value and the temperature of the power source serving as the condition under which the charging current is changed from said one current value to another current value were equal, then what is known as "chattering" would occur, where the charging current is set at one current value and then changed to another current value immediately after, then once again set at said one current value immediately after the change, which might cause a difficulty in terms of continuous and repeated increases and decreases in the charging current. According to (7), the temperature of the power source serving as the condition under which the charging current is set at one current value, and the temperature of the power source serving as the condition under which the charging current is changed from said one current value to another current value are different from each other, therefore limiting the occurrence of such a difficulty.

(8) The power supply unit as disclosed in any of (1) to (7), wherein
the control unit
sets the current value of the charging current at a predetermined current value smaller than an upper limit value of the predetermined range for a predetermined period, when there has been a charging start request after generation of the aerosol.

Electricity is supplied to the heating unit from the power source when an aerosol is generated by the heating unit, so it is also conceivable that the temperature of the power source will increase after aerosol generation. According to (8), the current value of the charging current is set at a predetermined current value smaller than an upper limit value of the predetermined range for a predetermined period, when there has been a charging start request after generation of the aerosol. This makes it possible to avoid a situation in which a large charging current flows while the power source is at a high temperature after aerosol generation, making it possible to suppress a further rise in the temperature of the power source.

(9) The power supply unit as disclosed in any of (1) to (7), wherein
the control unit
sets the current value of the charging current at a predetermined current value smaller than an upper limit value of the predetermined range for a predetermined period, when the temperature of the power source at the time of the charging start request was equal to or greater than a predetermined temperature included in the first temperature zone.

According to (9), the current value of the charging current is set at a predetermined current value smaller than an upper limit value of the predetermined range for a predetermined period, when the temperature of the power source at the time of the charging start request was equal to or greater than a predetermined temperature included in the first temperature zone. This makes it possible to avoid a situation in which a large charging current flows while the power source is at a high temperature, making it possible to suppress a further rise in the temperature of the power source.

(10) The power supply unit as disclosed in (8) or (9), wherein
the predetermined current value is the lower limit value.

According to (10), it is possible to more reliably avoid a situation in which a large charging current flows while the power source is at a high temperature.

(11) The power supply unit as disclosed in any of (8) to (10), wherein
the control unit
varies the current value of the charging current within the predetermined range in accordance with the temperature of the power source, when the temperature of the power source after the predetermined period has elapsed is included in the first temperature zone.

According to (11), the current value of the charging current is varied within the predetermined range in accordance with the temperature of the power source, when the temperature of the power source after the predetermined period has elapsed is included in the first temperature zone. This enables the charging current to be suitably controlled in accordance with the temperature of the power source after the predetermined period has elapsed, and also makes it possible for the power source to be efficiently charged while limiting situations in which the power source reaches a high temperature.

(12) The power supply unit as disclosed in any of (1) to (11), wherein
the control unit comprises:
a first control unit (charging IC 103) configured to be capable of controlling charging of the power source; and
a second control unit (MCU 104) configured to be capable of controlling the first control unit on the basis of the temperature of the power source,
   and
the second control unit
instructs the first control unit to vary the current value of the charging current within the predetermined range in accordance with the temperature of the power source when the temperature of the power source is included in the first temperature zone, and
the first control unit
varies the current value of the charging current in accordance with the instruction from the second control unit when the temperature of the power source is included in the first temperature zone, and
makes the current value of the charging current even smaller than the lower limit value of the predetermined range, independently of an instruction from the second control unit, when the temperature of the power source is included in the second temperature zone.

According to (12), the second control unit instructs the first control unit to vary the current value of the charging current within the predetermined range in accordance with the temperature of the power source when the temperature of the power source is included in the first temperature zone. The first control unit then varies the current value of the charging current in accordance with the instruction from the second control unit. As a result, when the temperature of the power source is included in the first temperature zone, it is possible for the power source to be efficiently charged while limiting situations in which the power source reaches a high temperature. Furthermore, the first control unit makes the current value of the charging current even smaller than the lower limit value of the predetermined range, independently of an instruction from the second control unit, when the temperature of the power source is included in the second temperature zone. By this means, even if the battery temperature were to exceed the threshold temperature despite the charging current being suitably controlled in accordance with the battery temperature, the first control unit would spontaneously restrict the charging current without awaiting an instruction from the second control unit, thereby enabling any further rises in the temperature of the power source to be rapidly suppressed. Accordingly, it is possible to limit situations in which the power source reaches a high temperature, and to perform charging taking safety into account.

(13) The power supply unit as disclosed in (12), wherein
the power supply unit further comprises a power receiver for receiving power output from the external power source,
the first control unit is a charging IC (integrated circuit) (charging IC 103) provided between the power receiver and the power source, and
the second control unit is an MCU (microcontroller unit) (MCU 104) for integrated control of the power supply unit.

According to (13), collaboration between the charging IC and the MCU enables the charging current to be suitably controlled in accordance with the temperature of the power source, and also makes it possible for the power source to be efficiently charged while limiting situations in which the power source reaches a high temperature.

(14) A control method performed by a computer (control unit 116, 116A, 116B; charging IC 103; MCU 104) for controlling a power supply unit (inhalation device 100, 100B; power supply unit 110) for an aerosol-generating device (inhalation device 100, 100A, 100B) for generating an aerosol by heating an aerosol source, wherein
the power supply unit comprises a power source (power source unit 111, 111A, 111B) configured to be capable of supplying power to a heating unit (heating unit 121, 121A, 121B) for heating the aerosol source and to be chargeable by means of power received from an external power source (external power source PS),
the computer acquires a temperature of the power source and is configured to be capable of controlling charging of the power source based on the temperature of the power source, and
the computer implements processing which
varies a current value of a charging current for charging the power source within a predetermined range in accordance with the temperature of the power source when the temperature of the power source is included in a first temperature zone, which is a temperature zone below a predetermined threshold temperature (step S7, step S24), and
makes the current value of the charging current even smaller than a lower limit value of the predetermined range when the temperature of the power source is included in a second temperature zone, which is a temperature zone at or above the threshold temperature (step S25).

According to (14), a current value of a charging current for charging the power source can be varied within a predetermined range in accordance with the temperature of the power source when the temperature of the power source is included in a first temperature zone, which is a temperature zone below a predetermined threshold temperature. Meanwhile, the current value of the charging current can be made even smaller than the lower limit value of the predetermined range when the temperature of the power source is included in the second temperature zone, which is a temperature zone at or above the threshold temperature. This enables the charging current to be suitably controlled in accordance with the temperature of the power source, and also makes it possible for the power source to be efficiently charged while limiting situations in which the power source reaches a high temperature. Accordingly, it is possible to achieve higher-quality charging control, enabling the charging time of the power source to be shortened while also ensuring safety.

(15) A control program which causes a computer (control unit 116, 116A, 116B; charging IC 103; MCU 104) for controlling a power supply unit (inhalation device 100, 100B; power supply unit 110) for an aerosol-generating device (inhalation device 100, 100A, 100B) for generating an aerosol by heating an aerosol source, to implement predetermined processing,
wherein
the power supply unit comprises a power source (power source unit 111, 111A, 111B) configured to be capable of supplying power to a heating unit (heating unit 121, 121A, 121B) for heating the aerosol source and to be chargeable by means of power received from an external power source (external power source PS),
the computer acquires a temperature of the power source and is configured to be capable of controlling charging of the power source based on the temperature of the power source, and the control program causes the computer to implement processing which
varies a current value of a charging current for charging the power source within a predetermined range in accordance with the temperature of the power source when the temperature of the power source is included in a first temperature zone, which is a temperature zone below a predetermined threshold temperature (step S7, step S24), and
makes the current value of the charging current even smaller than a lower limit value of the predetermined range when the temperature of the power source is included in a second temperature zone, which is a temperature zone at or above the threshold temperature (step S25).

According to (15), a current value of a charging current for charging the power source can be varied within a predetermined range in accordance with the temperature of the power source when the temperature of the power source is included in a first temperature zone, which is a temperature zone below a predetermined threshold temperature. Meanwhile, the current value of the charging current can be made even smaller than the lower limit value of the predetermined range when the temperature of the power source is included in the second temperature zone, which is a temperature zone at or above the threshold temperature. This enables the charging current to be suitably controlled in accordance with the temperature of the power source, and also makes it possible for the power source to be efficiently charged while limiting situations in which the power source reaches a high temperature. Accordingly, it is possible to achieve higher-quality charging control, enabling the charging time of the power source to be shortened while also ensuring safety.

(16) A computer-readable storage medium which stores the control program disclosed in (15).

According to (16), it is possible to cause a computer to implement the control program disclosed in (15).

### REFERENCE SIGNS LIST

100, 100A, 100B Inhalation device (aerosol-generating device, power supply unit)
110 Power supply unit
111, 111A, 111B Power source unit (power source)
121, 121A, 121B Heating unit
116, 116A, 116B Control unit (computer)
102 Power receiver
103 Charging IC (control unit, first control unit)
104 MCU (control unit, second control unit)
PS External power source

## Claims

1. A power supply unit for an aerosol-generating device for generating an aerosol by heating an aerosol source, the power supply unit comprising:
a power source configured to be capable of supplying power to a heating unit for heating the aerosol source and to be chargeable by means of power received from an external power source; and
a control unit which acquires a temperature of the power source and is configured to be capable of controlling charging of the power source based on the temperature of the power source,
wherein
the control unit
varies a current value of a charging current for charging the power source within a predetermined range in accordance with the temperature of the power source when the temperature of the power source is included in a first temperature zone, which is a temperature zone below a predetermined threshold temperature, and
makes the current value of the charging current even smaller than a lower limit value of the predetermined range when the temperature of the power source is included in a second temperature zone, which is a temperature zone at or above the threshold temperature.

2. The power supply unit as claimed in claim 1, wherein
the control unit
varies the current value of the charging current in accordance with the temperature of the power source when the temperature of the power source is included in the first temperature zone, so that the temperature of the power source does not exceed the threshold temperature.

3. The power supply unit as claimed in claim 1 or 2, wherein
the control unit
varies the current value of the charging current stepwise in accordance with the temperature of the power source when the temperature of the power source is included in the first temperature zone.

4. The power supply unit as claimed in claim 1 or 2, wherein
the control unit
varies the current value of the charging current linearly in accordance with the temperature of the power source when the temperature of the power source is included in the first temperature zone.

5. The power supply unit as claimed in claim 3 or 4, wherein
the control unit
sets the current value of the charging current at a predetermined first current value if the temperature of the power source reaches a predetermined first temperature when the temperature of the power source is also included in the first temperature zone, and
sets the current value of the charging current at a second current value greater than the first current value if the temperature of the power source reaches a second temperature lower than the first temperature while the current value of the charging current is set at the first current value.

6. The power supply unit as claimed in claim 5, wherein
the control unit
sets the current value of the charging current at a third current value smaller than the first current value if the temperature of the power source reaches a third temperature higher than the first temperature while the current value of the charging current is set at the first current value.

7. The power supply unit as claimed in claim 3, wherein
the temperature of the power source serving as the condition under which the charging current is set at one current value, and the temperature of the power source serving as the condition under which the charging current is changed from said one current value to another current value, are different from each other.

8. The power supply unit as claimed in any one of claims 1 to 7, wherein
the control unit
sets the current value of the charging current at a predetermined current value smaller than an upper limit value of the predetermined range for a predetermined period, when there has been a charging start request after generation of the aerosol.

9. The power supply unit as claimed in any one of claims 1 to 7, wherein
the control unit
sets the current value of the charging current at a predetermined current value smaller than an upper limit value of the predetermined range for a predetermined period, when the temperature of the power source at the time of the charging start request was equal to or greater than a predetermined temperature included in the first temperature zone.

10. The power supply unit as claimed in claim 8 or 9, wherein
the predetermined current value is the lower limit value.

11. The power supply unit as claimed in any one of claims 8 to 10, wherein
the control unit
varies the current value of the charging current within the predetermined range in accordance with the temperature of the power source, when the temperature of the power source after the predetermined period has elapsed is included in the first temperature zone.

12. The power supply unit as claimed in any one of claims 1 to 11, wherein
the control unit comprises:
a first control unit configured to be capable of controlling charging of the power source; and
a second control unit configured to be capable of controlling the first control unit on the basis of the temperature of the power source,
and
the second control unit
instructs the first control unit to vary the current value of the charging current within the predetermined range in accordance with the temperature of the power source when the temperature of the power source is included in the first temperature zone, and
the first control unit
varies the current value of the charging current in accordance with the instruction from the second control unit when the temperature of the power source is included in the first temperature zone, and
makes the current value of the charging current even smaller than the lower limit value of the predetermined range, independently of an instruction from the second control unit, when the temperature of the power source is included in the second temperature zone.

13. The power supply unit as claimed in claim 12, wherein
the power supply unit further comprises a power receiver for receiving power output from the external power source,
the first control unit is a charging IC provided between the power receiver and the power source,
and
the second control unit is an MCU for integrated control of the power supply unit.

14. A control method performed by a computer for controlling a power supply unit for an aerosol-generating device for generating an aerosol by heating an aerosol source, wherein
the power supply unit comprises a power source configured to be capable of supplying power to a heating unit for heating the aerosol source and to be chargeable by means of power received from an external power source,
the computer acquires a temperature of the power source and is configured to be capable of controlling charging of the power source based on the temperature of the power source, and
the computer implements processing which
varies a current value of a charging current for charging the power source within a predetermined range in accordance with the temperature of the power source when the temperature of the power source is included in a first temperature zone, which is a temperature zone below a predetermined threshold temperature, and
makes the current value of the charging current even smaller than a lower limit value of the predetermined range when the temperature of the power source is included in a second temperature zone, which is a temperature zone at or above the threshold temperature.

15. A control program which causes a computer for controlling a power supply unit for an aerosol-generating device for generating an aerosol by heating an aerosol source, to implement predetermined processing, wherein
the power supply unit comprises a power source configured to be capable of supplying power to a heating unit for heating the aerosol source and to be chargeable by means of power received from an external power source,
the computer acquires a temperature of the power source and is configured to be capable of controlling charging of the power source based on the temperature of the power source, and
the control program causes the computer to implement processing which varies a current value of a charging current for charging the power source within a predetermined range in accordance with the temperature of the power source when the temperature of the power source is included in a first temperature zone, which is a temperature zone below a predetermined threshold temperature, and
makes the current value of the charging current even smaller than a lower limit value of the predetermined range when the temperature of the power source is included in a second temperature zone, which is a temperature zone at or above the threshold temperature.
